# EUROPÄISCHE PATENTSCHRIFT

(11) **EP 3 894 733 B1**
(45) Veröffentlichungstag und Bekanntmachung des Hinweises auf die Patenterteilung: **17.07.2024**
(21) Anmeldenummer: 19816578.9
(22) Anmeldetag: 02.12.2019
(51) Int. Cl.: F16L 33/18, F16L 33/28, F16L 33/00, F16L 47/10, F16L 21/03, F16J 15/10

(54) **DICHTUNGSANORDNUNG, DICHTMUFFE UND DEREN VERWENDUNG**
SEALING ARRANGEMENT, SEALING SLEEVE AND USE THEREOF
DISPOSITIF D'ÉTANCHÉITÉ, MANCHON D'ÉTANCHÉITÉ ET LEUR UTILISATION

(30) Priorität: 11.12.2018 DE 102018131717
(43) Veröffentlichungstag der Anmeldung: 20.10.2021
(73) Patentinhaber: Carl Freudenberg KG, 69469 Weinheim (DE)
(72) Erfinder: GATTRINGER, Rudolf, 4284 Tragwein (AT)
(86) Internationale Anmeldenummer: PCT/EP2019/083234
(87) Internationale Veröffentlichungsnummer: WO 2020/120184

(56) Entgegenhaltungen:
- DD-A1- 71 417
- DE-T2- 69 104 839
- GB-A- 2 553 789
- US-A- 4 566 704

## Beschreibung

### Technisches Gebiet

Die Erfindung betrifft eine Dichtmuffe, eine Dichtungsanordnung, die die Dichtmuffe umfasst und deren Verwendung.

Die Dichtmuffe besteht aus einem Dichtungswerkstoff und ist für eine Dichtungsanordnung geeignet, wobei die Dichtungsanordnung ein erstes Rohr und ein zweites Rohr umfasst, die in ihrer Durchströmungsrichtung im Wesentlichen benachbart zueinander angeordnet sind und gemeinsam eine Leitung bilden, wobei das erste Rohr eine erste Stirnseite und das zweite Rohr eine zweite Stirnseite aufweist, wobei die erste Stirnseite die zweite Stirnseite mit radialem Abstand umschließt, wobei die Dichtmuffe unter radialer elastischer Vorspannung in dem durch den Abstand gebildeten Spalt dichtend angeordnet werden kann und dabei den Innenumfang des ersten Rohrs und den Außenumfang des zweiten Rohrs dichtend berührt, wobei die erste Stirnseite einen sich bundförmig in radialer Richtung nach außen erstreckenden Rand aufweist und wobei die Dichtmuffe stirnseitig einerseits einen sich im Wesentlichen radial nach innen erstreckenden Axialanschlag für die zweite Stirnseite aufweist, mit einem Innendurchmesser.

### Stand der Technik

Eine solche Dichtmuffe und eine Dichtungsanordnung, die eine solche Dichtmuffe umfasst, sind jeweils aus der DE 691 04 839 T2 bekannt und gelangen in einem Luftleitungssystem einer Diesel-Zugmaschine zur Anwendung.

Die dichtende Verbindung der Rohre wird durch aufwändige Schellenfixierungen erzielt. an den benachbart zueinander angeordneten Rohren befestigt ist. Die Schellenfixierungen sind teuer in der Herstellung, und die Montage ist aufwändig.

Die Dichtmuffe besteht aus einem elastomeren Werkstoff und ist zwischen den einander zugewandten Stirnseiten der Rohre dichtend angeordnet. Die dichtende Verbindung erfolgt durch eine Schelle der Schellenfixierung, durch die die Dichtmuffe unter elastischer Vorspannung dichtend verpresst wird.

Die Schelle sorgt nicht nur für eine dichtende Verpressung der Dichtmuffe zwischen den einander zugewandten Stirnseiten der Rohre, sondern sie verhindert auch die Bewegung der Dichtmuffe in Längsrichtung der Rohre.

Die Schelle besteht aus zwei Hälften, um die Schelle um die Dichtmuffe montieren zu können. Die beiden Hälften der Schelle können zum Beispiel durch eine Rastverbindung miteinander verbunden werden.

Weitere Dichtmuffen und weitere Dichtungsanordnungen sind aus den Dokumenten GB 2 553 789 A, US 4 566 704 A und DD 71 417 B1 bekannt. Die Dichtmuffen gelangen jeweils in Dichtungsanordnungen zur Anwendung, die ein erstes und ein zweites Rohr umfassen, die in ihrer Durchströmungsrichtung axial benachbart zueinander angeordnet sind und gemeinsam eine Leitung bilden. Das erste Rohr weist eine erste Stirnseite, das zweite Rohr eine zweite Stirnseite auf, wobei die erste Stirnseite die zweite Stirnseite mit radialem Abstand umschließt und wobei die Dichtmuffe unter radialer elastischer Vorspannung in dem durch den Abstand gebildeten Spalt dichtend angeordnet ist. Die Dichtmuffe berührt den Innenumfang des ersten Rohrs und den Außenumfang des zweiten Rohrs dichtend.

Die Dichtmuffe aus der GB 2 553 789 A weist einen im Wesentlichen zylinderförmigen Stützkörper auf, der von elastomerem Dichtungswerkstoff zumindest teilweise umschlossen ist. Stirnseitig einerseits weist der Stützkörper einen radial nach außen vorstehenden Bund auf, der einen Axialanschlag an der ersten Stirnseite des ersten Rohrs bildet.

Die Dichtmuffe aus der US 4 566 704 A umfasst ebenfalls einen Stützkörper aus einem zähharten Werkstoff, an dem ein Dichtring aus elastomeren Werkstoff festgelegt ist. Der Dichtring weist entweder mehrere, benachbart zueinander angeordnete Dichtlippen auf oder die Form eines O-Rings. Der Stützkörper kann ein stirnseitiges Ende eines der gegeneinander abzudichtenden Rohre umschließen.

Die Dichtmuffe aus der DD 71 417 B1 ist im Wesentlichen zylinderförmig ausgebildet und unter radialer Vorspannung in den eingangs beschriebenen radialen Abstand zwischen den Stirnseiten eingepresst. Die Oberflächen der einander zugewandten Stirnseiten oder die Oberfläche der Dichtmuffe können profiliert ausgebildet sein.

### Darstellung der Erfindung

Der Erfindung liegt die Aufgabe zugrunde, eine Dichtmuffe zu zeigen, durch die sich zu einer Leitung verbundene Rohre einfach, kostengünstig und ohne Schellenfixierungen dichtend miteinander verbinden lassen. Außerdem soll eine Dichtungsanordnung gezeigt werden, die einfach und kostengünstig herstellbar und montierbar ist. Darüber hinaus soll eine Verwendung von Dichtmuffe und Dichtungsanordnung genannt werden.

Diese Aufgabe wird erfindungsgemäß durch die Merkmale der Ansprüche 1, 6 und 15 gelöst. Auf vorteilhafte Ausgestaltungen nehmen die darauf jeweils rückbezogenen Ansprüche Bezug.

Zur Lösung der Aufgabe ist eine Dichtmuffe, wie eingangs beschrieben, vorgesehen, wobei die Dichtmuffe stirnseitig andererseits auf der dem Axialanschlag axial abgewandten Seite, eine klammerförmige Haltekralle umfasst, die den Rand formschlüssig umgreifen kann, wobei die Dichtmuffe in axialer Richtung zwischen der Haltekralle und dem Axialanschlag einen im Wesentlichen hohlzylinderförmigen Mantel aufweist und wobei der Mantel stirnseitig einerseits die Haltekralle und stirnseitig andererseits den Axialanschlag aufweist.

Durch den Axialanschlag können die miteinander zu verbindenden Maschinenelemente einfach und exakt relativ zueinander positioniert werden.

Der Mantel kann in axialer Richtung benachbart zueinander angeordnete Dichtwulste aufweisen. Diese Dichtwulste bilden zusammen mit den Maschinenelementen, die sie während der bestimmungsgemäßen Verwendung der Dichtmuffe anliegend berühren, Dichtbereiche, um zum Beispiel durch eine Rohrverbindung strömendes Medium gegenüber der Umgebung abzudichten.

Die Dichtwulste können in radialer Richtung nach außen und/oder radial nach innen vorgewölbt sein. Bevorzugt sind die Dichtwulste in radialer Richtung nach außen und radial nach innen vorgewölbt und haben, im Schnitt betrachtet, jeweils einen im Wesentlichen kreisförmigen Querschnitt. Im eingebauten Zustand der Dichtmuffe sind die Dichtwulste unter radialer elastischer Vorspannung an den Dichtflächen von gegeneinander abzudichtenden Rohren angelegt. Die dadurch entstehenden Abplattungen der Dichtwulste verbessern die Dichtwirkung der Dichtmuffe.

Es kann vorgesehen sein, dass die Dichtmuffe aus einem 2-K-Werkstoff besteht, umfassend eine erste Komponente X aus Thermoplast und eine zweite Komponente Y aus Elastomer. Der Thermoplast kann PA6, PA66 GF, PP, PPA, PPS oder dergleichen umfassen, das Elastomer kann Gummi, thermoplastische Elastomere oder dergleichen umfassen.

Die erste Komponente X aus Thermoplast ist im Bereich der Dichtmuffe als Trägermaterial eingesetzt, die zweite Komponente Y aus Elastomer ist als Dichtungsmaterial für eine Außen- und Innendichtung im Bereich der Dichtmuffe angeordnet.

Die beiden Komponenten X und Y sind stoffschlüssig, dauerhaltbar und dicht miteinander verbunden.

Eine Dichtmuffe aus einem 2-K-Werkstoff, die aus den Komponenten X (Thermoplast) und Y (Elastomer) besteht, hat den Vorteil, dass die Dichtmuffe dadurch besonders gut an die jeweiligen Gegebenheiten des Anwendungsfalles angepasst ist.

Die Komponente X aus Thermoplast ist für den zuvor beschriebenen Bereich als Träger-Verbundmaterial von Vorteil, weil die Dichtungskomponente - Dichtmuffe sauber positioniert und automaten- und montagefreundlich integriert und ausgeführt werden kann.

Die Komponente Y aus Elastomer ist für den zuvor beschriebenen Bereich von Vorteil, weil die Dichtmuffe ohne verdrillen, sauber, prozesssicher und positionsgenau montiert werden kann.

Die Dichtmuffe weist in axialer Richtung zwischen der Haltekralle und dem Axialanschlag einen im Wesentlichen hohlzylinderförmigen Mantel auf. Der Mantel weist eine axiale Länge auf, die im Wesentlichen der axialen Länge des aufgeweiteten Flanschs des ersten Rohrs entspricht.

Der Mantel kann in axialer Richtung benachbart zueinander angeordnete Dichtwulste aufweisen. Insbesondere dann, wenn die Dichtmuffe aus einem per Definition inkompressiblen Dichtungswerkstoff besteht, ist von Vorteil, dass durch die Dichtwulste Freiräume zwischen den Dichtwulsten begrenzt sind, in die der montagebedingt verdrängte Werkstoff der Dichtmuffe bei montierter Dichtungsanordnung ausweichen kann. Dadurch ist einerseits der Werkstoff der Dichtmuffe vor unerwünscht hohen mechanischen Belastungen geschützt, und andererseits ist die Montage der Dichtungsanordnung wesentlich vereinfacht. Die Gefahr einer Beschädigung der Dichtmuffe während der Montage der Dichtungsanordnung und daraus resultierend die Gefahr von Undichtigkeiten während der bestimmungsgemäßen Verwendung der Dichtungsanordnung sind dadurch jeweils auf ein Minimum begrenzt.

Die Dichtwulste können in radialer Richtung nach außen in Richtung des ersten Rohrs und/oder radial nach innen in Richtung des zweiten Rohrs vorgewölbt sein.

Besonders vorteilhaft ist es, wenn die Dichtwulste in radialer Richtung nach außen in Richtung des ersten Rohrs und radial nach innen in Richtung des zweiten Rohrs vorgewölbt sind und, im Schnitt betrachtet, jeweils einen im Wesentlichen kreisförmigen Querschnitt haben. Im montierten Zustand der Dichtungsanordnung ist der im Wesentlichen kreisförmige Querschnitt der Dichtwulste im Berührungsbereich mit dem Innenumfang des ersten Rohrs und dem Außenumfang des zweiten Rohrs jeweils etwas elastisch abgeplattet, wobei die Abdichtung im Bereich der Abplattungen erfolgt. Gelangen mehrere Dichtwulste in Durchströmungsrichtung der Leitung nebeneinanderliegend zur Anwendung, sind die Dichtwulste in einer funktionstechnischen Reihenschaltung angeordnet. Die Abdichtung im Übergangsbereich der Rohre zueinander ist dadurch besonders gut.

Außerdem ist zur Lösung der Aufgabe eine Dichtungsanordnung mit einer Dichtmuffe, wie zuvor beschrieben, vorgesehen, umfassend ein erstes Rohr und ein zweites Rohr, die in ihrer Durchströmungsrichtung im Wesentlichen benachbart zueinander angeordnet sind und gemeinsam eine Leitung bilden, wobei das erste Rohr eine erste Stirnseite und das zweite Rohr eine zweite Stirnseite aufweist, wobei die erste Stirnseite die zweite Stirnseite mit radialem Abstand umschließt, und eine Dichtmuffe aus einem Dichtungswerkstoff, wobei die Dichtmuffe unter radialer elastischer Vorspannung in dem durch den Abstand gebildeten Spalt dichtend angeordnet ist und den Innenumfang des ersten Rohrs und den Außenumfang des zweiten Rohrs dichtend berührt.

Die einander zugewandten Stirnseiten der beiden Rohre, die gemeinsam die Leitung bilden, sind bei der erfindungsgemäßen Dichtungsanordnung unter Zwischenfügung der Dichtmuffe ineinandergesteckt angeordnet. Es bedarf keiner aufwändigen Schlauchverbindung mit Schellenfixierung, um die Stirnseiten dichtend zu verbinden. Die Abdichtung der Stirnseiten erfolgt durch die Dichtmuffe.

Die Dichtmuffe besteht aus einem Dichtungswerkstoff zur mediumsdichten Abdichtung des Übergangs der beiden Rohre zueinander.

Der Dichtungswerkstoff kann materialeinheitlich sein. Eine solche Dichtmuffe ist besonders einfach herstellbar und kann im Anschluss an ihre Verwendung sortenrein recycelt werden.

Die Dichtmuffe kann aus einem gummielastischen Dichtungswerkstoff bestehen. In Abhängigkeit vom jeweiligen Anwendungsfall sollte der Werkstoff, aus dem die Dichtmuffe besteht, ausreichend temperatur- und/oder mediumsbeständig sein.

Die erste Stirnseite kann in radialer Richtung von einem ersten Rohr-Innendurchmesser auf einen inneren Flanschdurchmesser aufgeweitet sein. Durch die Aufweitung der ersten Stirnseite auf den Flanschdurchmesser kann die durch die Rohre gebildete Leitung auch im Übergangsbereich von einem Rohr zum anderen einen im Wesentlichen konstanten Strömungsquerschnitt aufweisen. In dem inneren Flanschdurchmesser des ersten Rohrs ist die zweite Stirnseite des zweiten Rohrs dichtend angeordnet.

Das zweite Rohr kann einen zweiten Rohr-Innendurchmesser aufweisen, der im Wesentlichen dem ersten Rohr-Innendurchmesser entspricht. Der Strömungsquerschnitt der Leitung ist dadurch im Wesentlichen konstant, und unerwünschte Verwirbelungen des Strömungsmediums werden vermieden.

Die erste Stirnseite kann einen sich bundförmig in radialer Richtung nach außen erstreckenden Rand aufweisen. An diesem Rand kann die Dichtmuffe befestigt sein.

Der Rand kann von der klammerförmigen Haltekralle formschlüssig umgriffen sein. Hierdurch ist von Vorteil, dass die Dichtmuffe in Bezug auf das erste Rohr, an dem sie befestigt ist, stets korrekt positioniert ist.

Der Axialanschlag kann einen axialen Anschlag für die zweite Stirnseite bilden und einen Innendurchmesser aufweisen,
der im Wesentlichen den beiden Rohr-Innendurchmessern entspricht. Durch den Axialanschlag wird die Gefahr von Montagefehlern minimiert.

Die Montage des zweiten Rohrs in die zuvor beschriebene, vormontierbare Einheit erfolgt derart, dass die zweite Stirnseite des zweiten Rohrs in axialer Richtung so lange in die Dichtmuffe eingeführt wird, bis die zweite Stirnseite am Axialanschlag der Dichtmuffe anschlägt. Der Axialanschlag ist also eine Positionierungshilfe, um die Dichtungsanordnung möglichst einfach, rasch und korrekt montieren zu können.

Der Innendurchmesser entspricht deshalb im Wesentlichen den beiden Rohr-Innendurchmessern, weil der Strömungsquerschnitt der Leitung dann auch im Übergangsbereich der beiden Rohre zueinander im Wesentlichen konstant ist.

Die zweite Stirnseite kann zumindest eine umfangsseitig umlaufende wulstförmige Verdickung aufweisen, die axial zwischen zwei axial benachbart zueinander angeordneten Dichtwulsten angeordnet ist. Durch eine solche Ausgestaltung ist das zweite Rohr formschlüssig und kraftschlüssig in der im aufgeweiteten Flansch des ersten Rohrs gehaltenen Dichtmuffe aufgenommen. Die Gefahr einer unerwünschten axialen Verlagerung des zweiten Rohrs bezogen auf die Dichtmuffe ist dadurch reduziert. Zusätzlich wird dem Monteur während der Montage dadurch ein Hinweis auf die korrekte Montage der Dichtungsanordnung gegeben, wenn die wulstförmige Verdickung des zweiten Rohrs zwischen den Dichtwulsten der Dichtmuffe einschnappt.

Das erste und/oder das zweite Rohr können aus einem zähharten oder flexiblen Werkstoff bestehen. Gelangt eine Dichtmuffe zur Anwendung, die aus einem im Wesentlichen gummielastischen Dichtungswerkstoff besteht, können die Rohre aus einem zähharten Werkstoff bestehen, beispielsweise aus einem zähharten Kunststoff oder aus einem metallischen Werkstoff. Herstellungs- und/oder montagebedingte Toleranzen werden durch die Dichtmuffe ausgeglichen. Zähharte Werkstoffe sind in der Regel kostengünstiger als Rohre aus einem flexiblen Werkstoff.

Das erste Rohr und die Dichtmuffe können bevorzugt eine vormontierbare Einheit bilden. Die Lagerung des ersten Rohrs mit der Dichtmuffe und die Montage der Dichtungsanordnung sind dadurch weiter vereinfacht. Die gesamte Dichtungsanordnung weist einen besonders teilarmen Aufbau auf. Die Dichtungsanordnung besteht in einem solchen Fall nur noch aus zwei miteinander zu montierenden Einzelteilen, nämlich der vormontierbaren Einheit und dem zweiten Rohr, das mit der vormontierbaren Einheit dichtend verbunden ist.

Außerdem betrifft die Erfindung die Verwendung einer Dichtungsanordnung und einer Dichtmuffe, jeweils wie zuvor beschrieben. Erfindungsgemäß ist es vorgesehen, dass die Dichtungsanordnung und die Dichtmuffe in einem Kühlflüssigkeitssystem eines Kraftfahrzeugs zur Anwendung gelangen. Kühlflüssigkeitssysteme von Kraftfahrzeugen haben bisher eine Vielzahl aufwändiger Schlauchverbindungen mit Schellfixierungen umfasst, die jeweils teuer in der Herstellung und aufwändig zu montieren waren. Durch die erfindungsgemäße Dichtungsanordnung und die erfindungsgemäße Dichtmuffe können Kühlflüssigkeitssysteme eines Kraftfahrzeugs nun wesentlich vereinfacht werden.

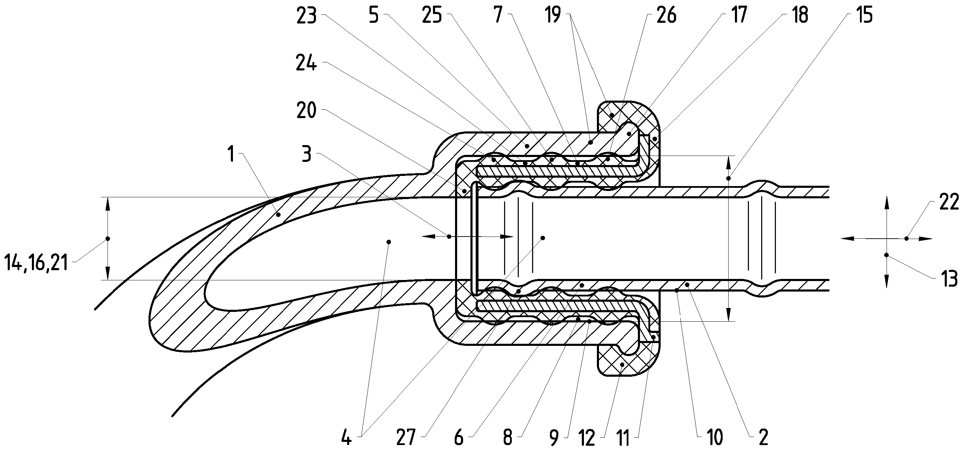

### Kurzbeschreibung der Zeichnung

Ein Ausführungsbeispiel der erfindungsgemäßen Dichtungsanordnung und der erfindungsgemäßen Dichtmuffe werden nachfolgend anhand der Figur gezeigt und näher beschrieben.

### Ausführung der Erfindung

In der Figur ist ein Ausführungsbeispiel einer erfindungsgemäßen Dichtungsanordnung gezeigt, die in einem Kühlflüssigkeitssystem eines Kraftfahrzeugs Verwendung findet.

Die erfindungsgemäße Dichtungsanordnung umfasst die erfindungsgemäße Dichtmuffe 7.

In der Figur ist ein Ausschnitt aus einem Kühlflüssigkeitssystem eines Kraftfahrzeugs im Bereich der Verbindung der beiden Rohre 1, 2 gezeigt.

Im gezeigten Ausführungsbeispiel besteht das erste Rohr 1 aus einem zähharten Kunststoff, zum Beispiel aus Polyamid, und das zweite Rohr 2 besteht aus Stahl. Die beiden Rohre 1, 2 sind in Durchströmungsrichtung 3 benachbart zueinander angeordnet und bilden gemeinsam die Leitung 4, die von Kühlflüssigkeit durchströmbar ist. Die Rohre 1, 2 sind im Bereich ihrer einander zugewandten Stirnseiten 5, 6 durch die Dichtmuffe 7 dichtend miteinander verbunden.

Die erste Stirnseite 5 des ersten Rohrs 1 ist in radialer Richtung 13 von dem ersten Rohr-Innendurchmesser 14 auf den inneren Flanschdurchmesser 15 aufgeweitet. Die erste Stirnseite 5 umschließt die zweite Stirnseite 6 des zweiten Rohrs 2 mit radialem Abstand, wobei in dem durch den Abstand gebildeten Spalt 8 die Dichtmuffe 7 unter radialer elastischer Vorspannung dichtend angeordnet ist. Die Dichtmuffe 7 dichtet durch Ihre Dichtwulste 24, 25, 26 gegenüber dem Innenumfang 9 des ersten Rohrs 1 und gegenüber dem Außenumfang 10 des zweiten Rohrs ab.

Im gezeigten Ausführungsbeispiel besteht die Dichtmuffe 7 aus einem 2-K-Werkstoff und umfasst die erste Komponente X 11 aus Thermoplast (zum Beispiel PA6, PA66 GF, PP, PPA, PPS oder dergleichen) und die zweite Komponente Y 12 aus Elastomer (zum Beispiel Gummi, thermoplastische Elastomere oder dergleichen).

Der zweite Rohr-Innendurchmesser 16 des zweiten Rohrs 2 und der erste Rohr-Innendurchmesser 14 des ersten Rohrs 1 sind im Wesentlichen gleich, ebenso wie der Innendurchmesser 21 des Axialanschlags 20, so dass der Strömungsquerschnitt der Leitung 4 auch im Verbindungsbereich der beiden Rohre 1, 2 im Wesentlichen konstant ist. Der Strömungswiderstand ist gering, und unerwünschte Verwirbelungen werden vermieden.

Die erste Stirnseite 5 hat einen sich bundförmig in radialer Richtung 13 nach außen erstreckenden Rand 17, an dem die Dichtmuffe 7 mit ihrer klammerförmigen Haltekralle 18 formschlüssig festgelegt ist. Auf der der Haltekralle 18 axial abgewandten Seite des Mantels 23 ist der sich radial nach innen erstreckende Axialanschlag 20 vorgesehen, der sich, in axialer Richtung 22 betrachtet, einerseits am ersten Rohr 1 abstützt. In axialer Richtung 22 andererseits bildet der Axialanschlag 20 einen Anschlag für die zweite Stirnseite 6 des zweiten Rohrs 2 während der Montage der Dichtungsanordnung. Ein direktes Anschlagen der zweiten Stirnseite 6 am ersten Rohr 1 ist dadurch ausgeschlossen.

Im gezeigten Ausführungsbeispiel sind exemplarisch drei in axialer Richtung 22 relativ zueinander benachbart angeordnete Dichtwulste 24, 25, 26 gezeigt, die jeweils einen im Wesentlichen kreisförmigen Querschnitt haben.

Die zweite Stirnseite 6 ist mit ihrer wulstförmigen Verdickung 27 axial zwischen den beiden Dichtwulsten 24, 25 angeordnet. Die zweite Stirnseite 6 ist dadurch kraft- und formschlüssig mit der vormontierbaren Einheit 19 dichtend verbunden.

## Patentansprüche

1. Dichtmuffe aus einem Dichtungswerkstoff, die für eine Dichtungsanordnung geeignet ist, wobei die Dichtungsanordnung ein erstes Rohr (1) und ein zweites Rohr (2) umfasst, die in ihrer Durchströmungsrichtung (3) im Wesentlichen benachbart zueinander angeordnet sind und gemeinsam eine Leitung (4) bilden, wobei das erste Rohr (1) eine erste Stirnseite (5) und das zweite Rohr (2) eine zweite Stirnseite (6) aufweist, wobei die erste Stirnseite (5) die zweite Stirnseite (6) mit radialem Abstand umschließt, wobei die Dichtmuffe (7) unter radialer elastischer Vorspannung in dem durch den Abstand gebildeten Spalt (8) dichtend angeordnet werden kann und dabei den Innenumfang (9) des ersten Rohrs (1) und den Außenumfang (10) des zweiten Rohrs (2) dichtend berührt, wobei die erste Stirnseite (5) einen sich bundförmig in radialer Richtung (13) nach außen erstreckenden Rand (17) aufweist und wobei die Dichtmuffe (7) stirnseitig einerseits einen sich im Wesentlichen radial nach innen erstreckenden Axialanschlag (20) für die zweite Stirnseite (6) aufweist, mit einem Innendurchmesser (21), **dadurch gekennzeichnet, dass** die Dichtmuffe (7) stirnseitig andererseits, auf der dem Axialanschlag (20) axial abgewandten Seite, eine klammerförmige Haltekralle (18) umfasst, die den Rand (17) formschlüssig umgreifen kann, dass die Dichtmuffe (7) in axialer Richtung (22) zwischen der Haltekralle (18) und dem Axialanschlag (20) einen im Wesentlichen hohlzylinderförmigen Mantel (23) aufweist und dass der Mantel (23) stirnseitig einerseits die Haltekralle (18) und stirnseitig andererseits den Axialanschlag (20) aufweist.

2. Dichtmuffe nach Anspruch 1, **dadurch gekennzeichnet, dass** der Mantel (23) in axialer Richtung (22) benachbart zueinander angeordnete Dichtwulste (24, 25, 26) aufweist.

3. Dichtmuffe nach Anspruch 2, **dadurch gekennzeichnet, dass** die Dichtwulste (24, 25, 26) in radialer Richtung (13) nach außen und/oder radial nach innen vorgewölbt sind.

4. Dichtmuffe nach einem der Ansprüche 3 oder 4, **dadurch gekennzeichnet, dass** die Dichtwulste (24, 25, 26) in radialer Richtung (13) nach außen und radial nach innen vorgewölbt sind und, im Schnitt betrachtet, jeweils einen im Wesentlichen kreisförmigen Querschnitt haben.

5. Dichtmuffe nach einem der Ansprüche 1 bis 4, **dadurch gekennzeichnet, dass** die Dichtmuffe (7) aus einem 2-K-Werkstoff besteht, umfassend eine erste Komponente X (11) aus Thermoplast, zum Beispiel PA6, PA66 GF, PP, PPA, PPS oder dergleichen, und eine zweite Komponente Y (12) aus Elastomer.

6. Dichtungsanordnung mit einer Dichtmuffe nach einem der Ansprüche 1 bis 5, umfassend ein erstes Rohr (1) und ein zweites Rohr (2), die in ihrer Durchströmungsrichtung (3) im Wesentlichen benachbart zueinander angeordnet sind und gemeinsam eine Leitung (4) bilden, wobei das erste Rohr (1) eine erste Stirnseite (5) und das zweite Rohr (2) eine zweite Stirnseite (6) aufweist, wobei die erste Stirnseite (5) die zweite Stirnseite (6) mit radialem Abstand umschließt, wobei die Dichtmuffe (7) unter radialer elastischer Vorspannung in dem durch den Abstand gebildeten Spalt (8) dichtend angeordnet ist und den Innenumfang (9) des ersten Rohrs (1) und den Außenumfang (10) des zweiten Rohrs (2) dichtend berührt.

7. Dichtungsanordnung nach Anspruch 6, **dadurch gekennzeichnet, dass** die erste Stirnseite (5) in radialer Richtung (13) von einem ersten Rohr-Innendurchmesser (14) auf einen inneren Flanschdurchmesser (15) aufgeweitet ist.

8. Dichtungsanordnung nach einem der Ansprüche 6 oder 7, **dadurch gekennzeichnet, dass** das zweite Rohr (2) einen zweiten Rohr-Innendurchmesser (16) aufweist, der im Wesentlichen dem ersten Rohr-Innendurchmesser (14) entspricht.

9. Dichtungsanordnung nach einem der Ansprüche 6 oder 7, **dadurch gekennzeichnet, dass** die erste Stirnseite (5) einen sich bundförmig in radialer Richtung (13) nach außen erstreckenden Rand (17) aufweist.

10. Dichtungsanordnung nach Anspruch 9, **dadurch gekennzeichnet, dass** der Rand (17) von der klammerförmigen Haltekralle (18) der Dichtmuffe (7) formschlüssig umgriffen ist.

11. Dichtungsanordnung nach einem der Ansprüche 6 bis 8, **dadurch gekennzeichnet, dass** der Axialanschlag (20) einen axialen Anschlag für die zweite Stirnseite (6) bildet und einen Innendurchmesser (21) aufweist, der im Wesentlichen den beiden Rohr-Innendurchmessern (14, 16) entspricht.

12. Dichtungsanordnung nach einem der Ansprüche 6 bis 11, **dadurch gekennzeichnet, dass** die zweite Stirnseite (6) zumindest eine umfangsseitig umlaufende wulstförmige Verdickung (27) aufweist, die axial zwischen zwei axial benachbart zueinander angeordneten Dichtwulsten (24, 25) der Dichtmuffe angeordnet ist.

13. Dichtungsanordnung nach Anspruch 6, **dadurch gekennzeichnet, dass** das erste (1) und/oder das zweite Rohr (2) aus einem zähharten oder flexiblen Werkstoff bestehen.

14. Dichtungsanordnung nach Anspruch 6, **dadurch gekennzeichnet, dass** das erste Rohr (1) und die Dichtmuffe (7) eine vormontierbare Einheit (19) bilden.

15. Verwendung einer Dichtmuffe nach einem der Ansprüche 1 bis 5 und einer Dichtungsanordnung nach einem der Ansprüche 6 bis 14 in einem Kühlflüssigkeitssystem eines Kraftfahrzeugs.

## Claims

1. Sealing sleeve from a sealing material, which is suitable for a sealing arrangement, wherein the sealing arrangement comprises a first pipe (1) and a second pipe (2) which in the flow direction (3) thereof are disposed substantially adjacent to one another and conjointly form a line (4), wherein the first pipe (1) has a first end side (5) and the second pipe (2) has a second end side (6), wherein the first end side (5) encloses the second end side (6) by way of a radial spacing, wherein the sealing sleeve (7), while being radially elastically pre-loaded, can be disposed in a sealing manner in the gap (8) formed by the spacing and in the process contacts the internal circumference (9) of the first pipe (1) and the external circumference (10) of the second pipe (2) in a sealing manner, wherein the first end side (5) has a periphery (17) which extends in the manner of a band in the radial direction (13) towards the outside, and wherein the sealing sleeve (7) on the one end side has an axial detent (20) for the second end side (6), which axial detent (20) extends substantially radially towards the inside, and has an internal diameter (21), **characterized in that** the sealing sleeve (7) on the other end side, on the side that faces axially away from the axial detent (20), comprises a clamp-shaped holding claw (18) which can encompass the periphery (17) in a form-fitting manner, **in that** the sealing sleeve (7) in the axial direction (22) between the holding claw (18) and the axial detent (20) has a substantially hollow-cylindrical casing (23), and **in that** the casing (23) on one end side has the holding claw (18) and on the other end side has the axial detent (20) .

2. Sealing sleeve according to Claim 1, **characterized in that** the casing (23) has sealing beads (24, 25, 26) which are disposed adjacent to one another in the axial direction (22).

3. Sealing sleeve according to Claim 2, **characterized in that** the sealing beads (24, 25, 26) are pre-cambered in the radial direction (13) towards the outside and/or radially towards the inside.

4. Sealing sleeve according to one of Claims 3 or 4, **characterized in that** the sealing beads (24, 25, 26) are pre-cambered in the radial direction (13) towards the outside and radially towards the inside and in a sectional view have in each case a substantially circular cross section.

5. Sealing sleeve according to one of Claims 1 to 4, **characterized in that** the sealing sleeve (7) is composed of a bi-component material comprising a first component X (11) of thermoplastic material, for example PA6, PA66GF, PP, PPA, PPS or the like, and a second component Y (12) of elastomer.

6. Sealing arrangement having a sealing sleeve according to one of Claims 1 to 5, comprising a first pipe (1) and a second pipe (2) which, when viewed in the flow direction (3) thereof, are disposed substantially adjacent to one another and conjointly form a line (4), wherein the first pipe (1) has a first end side (5) and the second pipe (2) has a second end side (6), wherein the first end side (5) encloses the second end side (6) by way of a radial spacing, wherein the sealing sleeve (7), while being radially elastically pre-loaded, is disposed in a sealing manner in the gap (8) formed by the spacing and contacts the internal circumference (9) of the first pipe (1) and the external circumference (10) of the second pipe (2) in a sealing manner.

7. Sealing arrangement according to Claim 6, **characterized in that** the first end side (5) is enlarged in the radial direction (13), from a first pipe internal diameter (14) to an inner flange diameter (15).

8. Sealing arrangement according to one of Claims 6 or 7, **characterized in that** the second pipe (2) has a second pipe internal diameter (16) which corresponds substantially to the first pipe internal diameter (14) .

9. Sealing arrangement according to one of Claims 6 or 7, **characterized in that** the first end side (5) has a periphery (17) which extends in the manner of a band in the radial direction (13) towards the outside.

10. Sealing arrangement according to Claim 9, **characterized in that** the periphery (17) is encompassed by the clamp-shaped holding claw (18) of the sealing sleeve (7) in a form-fitting manner.

11. Sealing arrangement according to one of Claims 6 to 8, **characterized in that** the axial detent (20) forms an axial detent for the second end side (6) and has an internal diameter (21) which corresponds substantially to the two pipe internal diameters (14, 16).

12. Sealing arrangement according to one of Claims 6 to 11, **characterized in that** the second end side (6) has at least one circumferentially encircling, bead-shaped thickening (27) which is disposed axially between two sealing beads (24, 25) of the sealing sleeve that are disposed axially adjacent to one another.

13. Sealing arrangement according to Claim 6, **characterized in that** the first pipe (1) and/or the second pipe (2) are/is composed of a hard-and-tough or flexible material.

14. Sealing arrangement according to Claim 6, **characterized in that** the first pipe (1) and the sealing sleeve (7) form a unit (19) which is able to be preassembled.

15. Use of a sealing sleeve according to one of Claims 1 to 5, and of a sealing arrangement according to one of Claims 6 to 14, in a cooling liquid system of a motor vehicle.

## Revendications

1. Manchon d'étanchéité comprenant un matériau d'étanchéité, ledit manchon d'étanchéité étant adapté à un ensemble d'étanchéité, l'ensemble d'étanchéité comprenant un premier tube (1) et un deuxième tube (2) qui sont disposés de manière sensiblement adjacente l'un à l'autre dans leur direction d'écoulement (3) et formant conjointement une conduite (4), le premier tube (1) comportant une première face frontale (5) et le deuxième tube (2) comportant une deuxième face frontale (6), la première face frontale (5) entourant la deuxième face frontale (6) à une distance radiale, le manchon d'étanchéité (7) pouvant être disposé de manière étanche sous précontrainte élastique radiale dans l'espace (8) formé par la distance et venant ainsi en contact avec la circonférence intérieure (9) du premier tube (1) et la circonférence extérieure (10) du deuxième tube (2), la première face frontale (5) comportant un bord (17) qui s'étend vers l'extérieur en forme de collier dans une direction radiale (13) et le manchon d'étanchéité (7) comportant d'une part une butée axiale (20) qui s'étend sensiblement radialement vers l'intérieur et qui est destinée à la deuxième face frontale (6), avec un diamètre intérieur (21), **caractérisé en ce que** le manchon d'étanchéité (7) comprend d'autre part, sur la face frontale, du côté axialement opposé à la butée axiale (20), une griffe de retenue (18) en forme de pince qui peut s'engager autour du bord (17) par complémentarité de formes de sorte que le manchon d'étanchéité (7) comporte dans la direction axiale (22) entre la griffe de retenue (18) et la butée axiale (20) une enveloppe (23) sensiblement en forme de cylindre creux et **en ce que** l'enveloppe (23) comporte sur la face frontale d'une part la griffe de retenue (18) et sur la face frontale d'autre part la butée axiale (20).

2. Manchon d'étanchéité selon la revendication 1, **caractérisé en ce que** l'enveloppe (23) comporte des bourrelets d'étanchéité (24, 25, 26) qui sont disposés de manière adjacente les uns aux autres dans la direction axiale (22).

3. Manchon d'étanchéité selon la revendication 2, **caractérisé en ce que** les bourrelets d'étanchéité (24, 25, 26) sont bombés vers l'extérieur et/ou radialement vers l'intérieur dans la direction radiale (13).

4. Manchon d'étanchéité selon l'une quelconque des revendications 3 ou 4, **caractérisé en ce que** les bourrelets d'étanchéité (24, 25, 26) sont bombés vers l'extérieur dans une direction radiale (13) et radialement vers l'intérieur et ont chacun, dans une vue en coupe, une section transversale de forme sensiblement circulaire.

5. Manchon d'étanchéité selon l'une quelconque des revendications 1 à 4, **caractérisé en ce que** le manchon d'étanchéité (7) est un matériau à deux composants qui comprend un premier composant X (11) en matière thermoplastique, par exemple PA6, PA66 GF, PP, PPA, PPS ou similaire, et un deuxième composant Y (12) en matière élastomère.

6. Ensemble d'étanchéité pourvu d'un manchon d'étanchéité selon l'une des revendications 1 à 5, ledit ensemble d'étanchéité comprenant un premier tube (1) et un deuxième tube (2) qui sont disposés de manière sensiblement adjacente l'un à l'autre dans leur direction d'écoulement (3) et qui forment conjointement une conduite (4), le premier tube (1) comprenant une première face frontale (5) et le deuxième tube (2) comprenant une deuxième face frontale (6), la première face frontale (5) s'engageant autour de la deuxième face frontale (6) à une distance radiale, le manchon d'étanchéité (7) étant disposé de manière étanche sous précontrainte élastique radiale dans l'espace (8) formé par la distance et venant de manière étanche en contact avec la circonférence intérieure (9) du premier tube (1) et la circonférence extérieure (10) du deuxième tube (2).

7. Ensemble d'étanchéité selon la revendication 6, **caractérisé en ce que** la première face frontale (5) est élargie dans la direction radiale (13) depuis un premier diamètre de tube intérieur (14) jusqu'à un diamètre de bride intérieur (15).

8. Ensemble d'étanchéité selon l'une quelconque des revendications 6 ou 7, **caractérisé en ce que** le deuxième tube (2) présente un deuxième diamètre de tube intérieur (16) qui correspond sensiblement au premier diamètre de tube intérieur (14).

9. Ensemble d'étanchéité selon l'une quelconque des revendications 6 ou 7, **caractérisé en ce que** la première face frontale (5) comporte un bord (17) en forme de collerette qui s'étend vers l'extérieur dans une direction radiale (13).

10. Ensemble d'étanchéité selon la revendication 9, **caractérisé en ce que** la griffe de retenue (18), en forme de pince, du manchon d'étanchéité (7) s'engage autour du bord (17) par complémentarité de formes.

11. Ensemble d'étanchéité selon l'une quelconque des revendications 6 à 8, **caractérisé en ce que** la butée axiale (20) forme une butée axiale destinée à la deuxième face frontale (6) et présente un diamètre intérieur (21) qui correspond sensiblement aux deux diamètres de tube intérieurs (14, 16).

12. Ensemble d'étanchéité selon l'une quelconque des revendications 6 à 11, **caractérisé en ce que** la deuxième face frontale (6) présente au moins un épaississement circonférentiel (27) en forme de bourrelet qui est situé axialement entre deux bourrelets d'étanchéité (24, 25) du manchon d'étanchéité qui sont disposés de manière axialement adjacente l'un à l'autre.

13. Ensemble d'étanchéité selon la revendication 6, **caractérisé en ce que** le premier (1) et/ou le deuxième tube (2) sont en une matière résistante ou flexible.

14. Ensemble d'étanchéité selon la revendication 6, **caractérisé en ce que** le premier tube (1) et le manchon d'étanchéité (7) forment une unité pré-assemblée (19).

15. Utilisation d'un manchon d'étanchéité selon l'une quelconque des revendications 1 à 5 et d'un ensemble d'étanchéité selon l'une des revendications 6 à 14 dans un système de refroidissement d'un véhicule automobile.
